# EUROPEAN PATENT APPLICATION

(11) **EP 2 642 168 A1**
(43) Date of publication of application: **25.09.2013**
(21) Application number: 13155643.3
(22) Date of filing: 18.02.2013
(51) Int. Cl.: F16K 11/04, F16K 31/00

(54) **Thermostatic cartridge and corresponding tap body**

(30) Priority: 22.03.2012 IT BS20120043
(71) Applicant: Galatron Plast S.p.A., 46043 Castiglione delle Stiviere (MN) (IT)
(72) Inventor: Tedoldi, Giancarlo, I-46043 Castiglione delle Stiviere (MN) (IT)
(74) Representative: Pes, Matteo

(57) **Abstract**

A thermostatic cartridge (1) and the respective tap body (6) are described. The cartridge comprises:
- a longitudinal axis X-X;
- a lower portion (4), that could be longitudinally inserted within a tap body (6), provided with an inner chamber for mixing water and provided with side holes for separately supplying hot water and cold water to the mixing chamber;
- an upper portion (3), comprising automatic means for regulating the flow rates of hot water and cold water; means for attaching the upper portion of the thermostatic cartridge to the tap body.

The attaching means in their turn comprise at least one U-shaped washer (5), or fork, a corresponding accommodating seat (31) obtained in the upper portion of the thermostatic cartridge, in a plane orthogonal to the longitudinal axis X-X, and means (7) for pushing the washer into the corresponding seat.

Advantageously, the washer (5) is slidingly inserted into the corresponding seat under the effect of the pushing means (7) to engage a suitable groove (62) obtained in the tap body (6) with its two ends.

## Description

### Field Of The Invention

The present invention generally concerns the field of mixing taps for hot and cold water, and in particular it concerns a thermostatic cartridge and a corresponding body of mixing tap for high pressure water-supply lines or subjected to water hammers.

### State Of The Art

The thermostatic mixing taps usually comprise a thermostatic cartridge, substantially cylindrical, which provides, positioned differently along its own longitudinal axis, two series of side holes for separated hot and cold water inflows. The cartridge is inserted in a tap body in its turn intended to be wall-mounted, for example, in a shower, a bathtub, etc.

Usually the thermostatic cartridge and the tap body are coaxial, once assembled.

Between the cartridge and the tap body two annular chambers are defined through which cold water and hot water are separately supplied to the corresponding side holes of the thermostatic cartridge; in concrete terms each annular chamber for supplying water is aligned and in fluidic communication with one of the two series of side holes of the cartridge, and the two annular chambers are axially separated by a narrowing section of the tap body.

The mixing of hot water with cold water happens in the cartridge, at an inner mixing chamber opening outwards through an outlet hole provided at the bottom of the tap body. The thermostatic cartridge is provided with means allowing the delivered water temperature to be set and then adjusted automatically, keeping it almost constant over time, comparing conveniently the flow rates of hot and cold water to be mixed. For example, thermostatic taps comprise a heat - sensitive bulb that, dilating and contracting as the temperature of water passing through the mixing chamber changes, operates the axial movement of a regulator of the flow rates of hot water and cold water supplied through the side holes of the thermostatic cartridge, and consequently it feedback adjusts the temperature of mixed water coming out from the tap.

The types of thermostatic taps allow, in addition to the afore mentioned adjustment of the temperature of exiting water, to adjust the flow rate of the delivered water. Usually these taps comprise suitable adjusting knobs of the flow rate the user operates by hand.

Usually the thermostatic cartridge is arranged in the tap body so that the lower portion of the cartridge is at the respective drain hole and the upper portion of the cartridge is at the upper edge of the tap body. The cartridge is locked in the correct operating position be means of convenient fastening means acting on the upper portion of the cartridge. Such fastening means usually comprise a retaining screw or grub screw or, alternatively, a threaded ferrule. The retaining screw is radially inserted into a through hole obtained through the wall of the tap body and it engages a threaded hole obtained at the side surface of the upper portion of the thermostatic cartridge. The threaded ferrule engages a thread obtained on the inner surface of the tap body and, by abutting against the upper surface of the closing portion of the thermostatic cartridge, acts as a cap that closes the cartridge itself in the inner volume of the tap body.

In order that the tap is operating, it is important to keep the positioning of the thermostatic cartridge with respect to the tap body. Possible displacements of the thermostatic cartridge with respect to the annular chambers could cause improper functioning of the tap, because the nominal flow rates of how water and cold water supplied through the side holes of the thermostatic cartridge would be unexpectedly changed by the occurred geometrical changes of the annular chambers themselves, just defined between the thermostatic cartridge and the tap body.

According to the most known implementation techniques a thermostatic cartridge can have a metal body, typically brass, or else be made of plastics, whereas the tap body is mostly metal.

For example, Documents US 2010/206955, US 5,242,108 and US 6,848,234 are indicative of the state of the art.

Usually the thermostatic cartridge is constrained to the tap body by means of a retaining screw engaging a radial hole made thorough the tap body wall and engaging a side of the cartridge.

This type of coupling entails criticality.

In particular when the mixing tap intercepts a water-supply line in which high pressure water is supplied or else a line subjected to water hammers, the localized coupling defined by the retaining screw engaged in the hole of the thermostatic cartridge does not impede the action of forces generating a bending moment onto the thermostatic cartridge. In the long run the coupling between the retaining screw and the cartridge can give way.

The International patent application WO 2009/050380 describes a tap in which the retaining screw, inserted through the side wall of the tap body, does not engage directly the plastic thermostatic cartridge. As a matter of fact, the thermostatic cartridge is a fork-like element, made of a metal material, intended to abut against the inner side of the tap body and against the outer surface of the thermostatic cartridge; the retaining screw engages a side hole of the fork element. In the assembled position provided for the tap operation, the fork-like element embraces at least partially the closing portion of the thermostatic cartridge, and it abuts against the inner surface of the tap body due to the radial force applied by the retaining screw. The fork-like element is provided with shaped ends which snap engage corresponding seat provided along the perimeter of the thermostatic cartridge, at the respective closure portion. Then the fork-like element acts as a spacer that limits the movements of the thermostatic cartridge with respect to the tap body.

This solution has drawbacks too. The coupling between the fork-like elements and the thermostatic cartridge is subjected to high bending moments, as it is realized in only one point, that one of the contact between the fork-like element and the seat provided along the cartridge perimeter.

It has to be considered that, in order to check the strength of the mixing taps in the use conditions in high pressure lines, a lot of Countries have severe test regulations.

For example, the French standard NF ECAU imposes the passing of a test in which a water hammer is simulated by subjecting the mixing tap to a pressure gradient of 8-50 bars. In these conditions possible breakdowns of the plastic material could easily cause such misalignments between the thermostatic cartridge and the tap body to also preclude the correct operation.

### Summary Of The Invention

The object of the present invention is therefore to provide a thermostatic cartridge and a corresponding tap body allowing to overcome the drawbacks of the conventional solutions and operate correctly for a long time, although subjected to high pressures and water hammers, also when the tap body of the thermostatic cartridge is made of plastic material.

Then the present invention concerns a thermostatic cartridge according to claim 1 and a corresponding tap body according to claim 2.

Particularly, the thermostatic cartridge comprises:
- a longitudinal axis X-X;
- a lower portion, that could be longitudinally inserted within the tap body, provided with an inner chamber for mixing water and provided with side holes for separately supplying hot water and cold water to said mixing chamber;
- an upper portion comprising automatic means for regulating the flow rates of hot water and cold water supplied to the mixing chamber, for example a bulb sensitive to temperature changes and a return spring;
- means for attaching the upper portion of the thermostatic cartridge to the tap body.

The attaching means, in their turn, comprise:
- at least one U-shaped metal washer, or fork, and a corresponding accommodating seat obtained in the upper portion of the thermostatic cartridge, in a plane orthogonal to the longitudinal axis X-X;
- means for pushing the washer into the corresponding seat.

Advantageously, the washer can be slidingly inserted into the corresponding seat, under the effect of the pushing means, to engage with its two ends a suitable groove obtained in the tap body.

The just described solution allows to obtain an effective coupling of the thermoplastic cartridge, both metallic and at least in part made of plastics, with the tap body. The test the Applicant made demonstrated that the coupling between the thermostatic cartridge and the tap body easily withstands the test according to French standard NF ECAU; in addition the configuration of the U-shaped washer allows to easily obtain the correct alignment of the cartridge in the tap body, that is the coaxial positioning of the two components, and to keep it over time.

In other words the coupling between the thermostatic cartridge and the tap body proved to be resistant against water hammers and high pressures and prevents the cartridge from moving under the effect of forces that, in traditional solutions, generate bending moments around the coupling with the tap body. In particular, the cartridge is not displaced with respect to the tap body, nor during long time periods and a number of thermal cycles.

In its turn the tap body comprises a substantially cylindrical inner compartment for accommodating at least part of the thermostatic cartridge. At the height of the accommodating seat of the washer, in the surface bounding the compartment, at least one groove is obtained in which the two ends of the U-shaped washer can be inserted at least partially.

Preferably the two ends of the washer are fitted into the groove with no longitudinal clearance, to prevent the thermostatic cartridge from displacing in parallel with the longitudinal axis X-X.

Preferably the accommodating seat of the washer substantially extends inside the upper portion of the cartridge and it is bounded on top and bottom by surfaces thereof. The seat has a first side opening adapted to accommodate the curved part of the U-shaped washer and two second side openings, extending from the opposite side with respect to the first side opening, allowing for the going out of the corresponding two ends of the U-shaped washer. In practice the washer can be inserted sideways in the thermostatic cartridge from a side, and the ends of the two legs of the U come out from the opposite side to engage the groove in the tap body.

In a preferred embodiment, the U-shaped washer is provided with two or more teeth facing towards the longitudinal axis X-X and the thermostatic cartridge is provided with corresponding seats engaging with the teeth of the washer. The shape coupling between the washer teeth and the respective seats prevents the accidental slip-off of the washer from the corresponding seat in the thermostatic cartridge. This feature aids the installations of the cartridge into the tap body.

Preferably the curved portion of the U-shaped washer comprises an outer surface, intended to face the inner side of the tap body, for the stop with the pushing means and an inner surface, opposite to the former, intended to abut against an inner portion of the cartridge. The distance between such an inner surface and the two leg ends of the U-shaped washer is predefined to obtain the correct positioning of the cartridge in the body of tap, with the longitudinal axis X-X matching with the axis of the tap body.

Preferably the U-shaped washer is made of a metal selected from brass, steel, aluminium or alloys thereof. More preferably a washer has a generically flattened shape.

In an embodiment the pushing means comprise a threaded grub screw that could be screwed in a corresponding through hole of the body of tap radially extending at the height of the accommodating seat of the washer. Alternatively the push element is a spring or an equivalent resilient element that can be snap inserted in the hole of the tap body.

### List Of The Figures

Further characteristics and advantages of the present invention will be more evident from a review of the following specification of a preferred, but not exclusive, embodiment, shown for illustration purposes only and without limitation, with the aid of the attached drawings, in which:
- figure 1 is a perspective view of a thermostatic cartridge according to the present invention, in a first configuration;
- figure 2 is a detailed perspective view of the thermostatic cartridge shown in figure 1, in a second configuration;
- figure 3 is a detailed perspective view of the thermostatic cartridge shown in figure 1, in a third configuration;
- figure 4 is a partially exploded perspective view of the thermostatic cartridge shown in figure 1 and a tap body according to the present invention;
- figure 5 is a partially phantom perspective view of the thermostatic cartridge shown in figure 1, inserted in the tap body according to the present invention;
- figure 6 is a partially phantom perspective view of the thermostatic cartridge shown in figure 1, coupled to a tap body according to the present invention;
- figure 7 is a side elevation view of the assembly shown in figure 6;
- figure 7A is an axial section view of the thermostatic cartridge shown in figure 1, inserted in the tap body and attached to the latter;
- figure 8 is a cross section of the assembly shown in figure 6, considered in the plane VIII - VIII of figure 7.

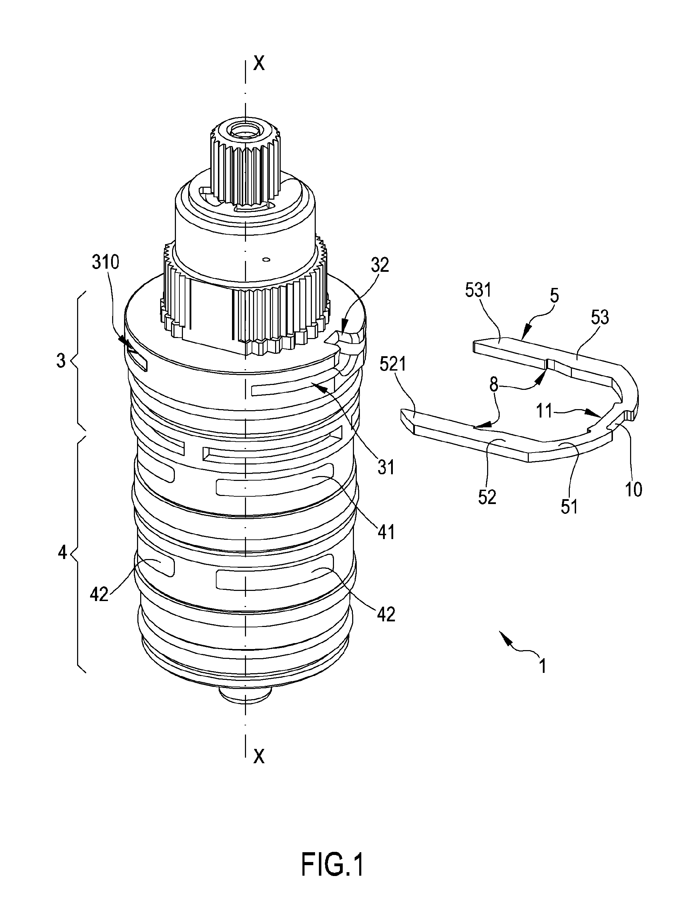

In particular, figure 1 shows an example of thermostatic cartridge 1 according to an embodiment of the present invention.

### Detailed Description Of The Invention

The thermostatic cartridge **1** has a substantially cylindrical shape, extending along a longitudinal axis X-X, and it is intended to be accommodated in a tap body, coaxially with respect to the respective longitudinal axis. The cartridge **1** comprises, at its lower portion **4** and at different levels along the axis X-X, a plurality of side holes **41, 42** (schematized only) in fluidic communication with a water mixing chamber provided inside the cartridge **1.**

At least the upper portion **3** of the cartridge **1,** but preferably the whole cartridge **1,** is made of a plastic material.

The upper portion **3** is intended to be constrained to a tap body by means of a U-shaped metal attaching washer **5,** that is a fork provided with a generically curved portion **51** from which two substantially straight legs **52, 53** depart. The legs **52** and **53** end with the shaped ends **521** and **531,** respectively, the latter being intended to engage a groove of the inner surface of the tap body.

The legs **52** and **53** are provided with opposing teeth **8,** intended to engage corresponding seat of the cartridge **1.**

In a plane orthogonal to the axis X-X, inside the upper portion **3** of the cartridge **1** a seat **31** for slidingly accommodating a washer **5** is obtained. The seat **31** comprises a first opening having the function of accommodating the curved portion **51** of the washer **5** and two openings **310** opposed to the latter, through which the legs **52** and **53** have to come out.

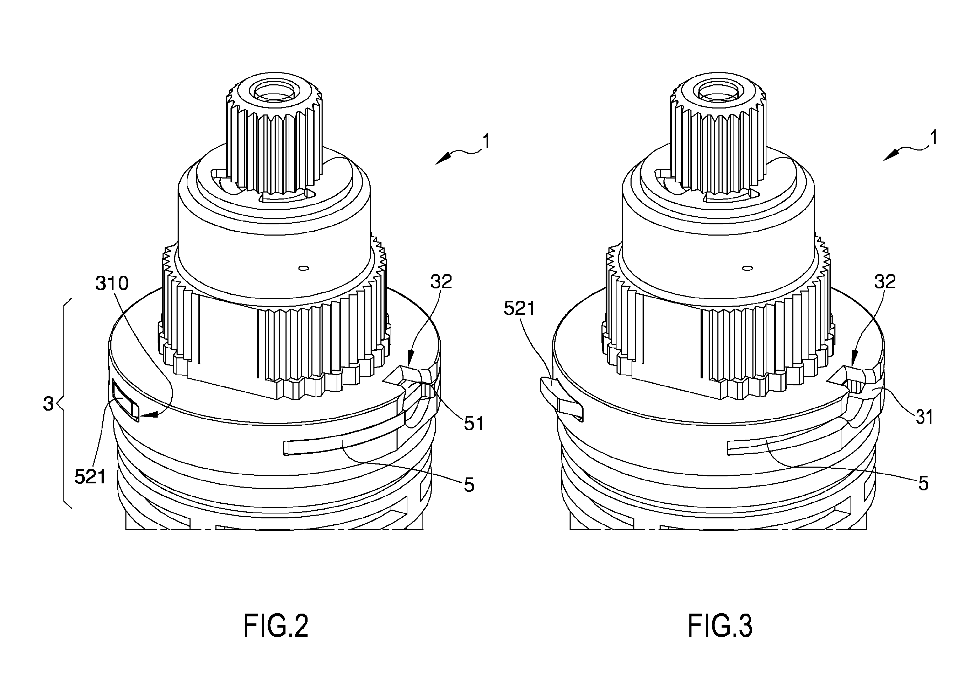

Figure **2** shows an enlargement of the upper portion **3** of the cartridge **1** with the washer **5** inserted in the corresponding seat **31.** In this arrangement the washer **5** does not protrude laterally from the cartridge **1,** the latter being able to be inserted inside the corresponding tap body with no blocks.

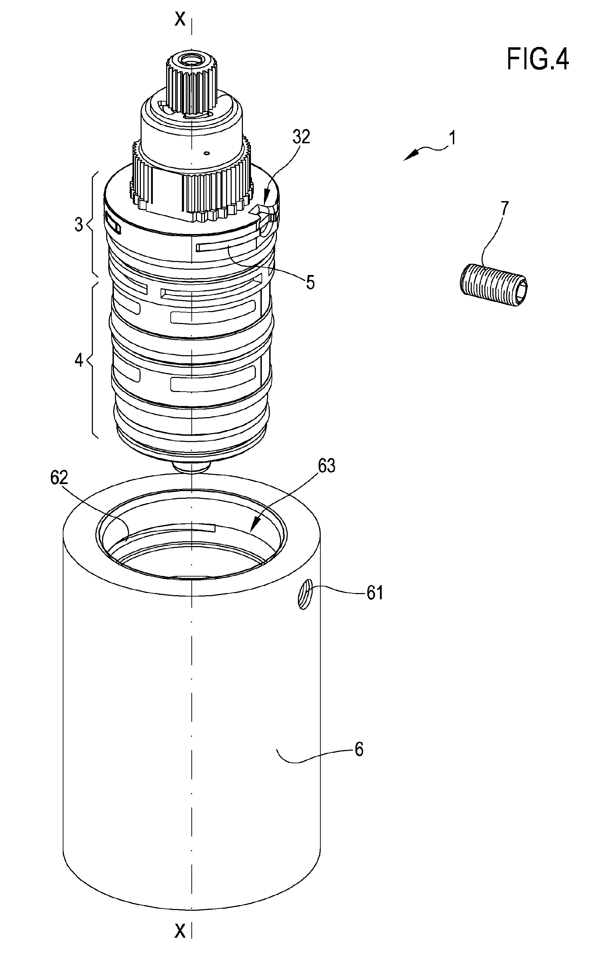

Figure **3** shows an enlargement of the upper portion **3** of the cartridge **1** with the two ends **521** and **531** not protruding laterally from the side of the cartridge **1,** or rather they come out from the seat **31.** The washer **5** is pushed in this position, by sliding into the seat **31,** only after the cartridge **1** has been inserted into the tap body (not shown in this figure, but in figure **4****).**

Figure **4** shows a cartridge **1** in the inserting step into the corresponding body of tap **6.** The latter is provided with an inner compartment **63** for accommodating the cartridge **1** and with a radial through hole **61** in which a screw, or grub screw, **7** can be screwed. At the inner wall of the body tap **6** is obtained a groove **62** having the function of accommodating the ends **521** and **531** of the washer **5** with a minimum of clearance.

In the shown embodiment, the groove **62** is the only one and it extends, along an arc of a circle, in a plane orthogonal to the longitudinal axis X-X. Alternatively, the grooves can be two, one for each of the ends **521** and **531** of the washer **5.**

During the insertion of the cartridge **1** into the body of the tap **6,** the washer **5** does not protrude sideways with respect to the bulk of the cartridge **1** itself.

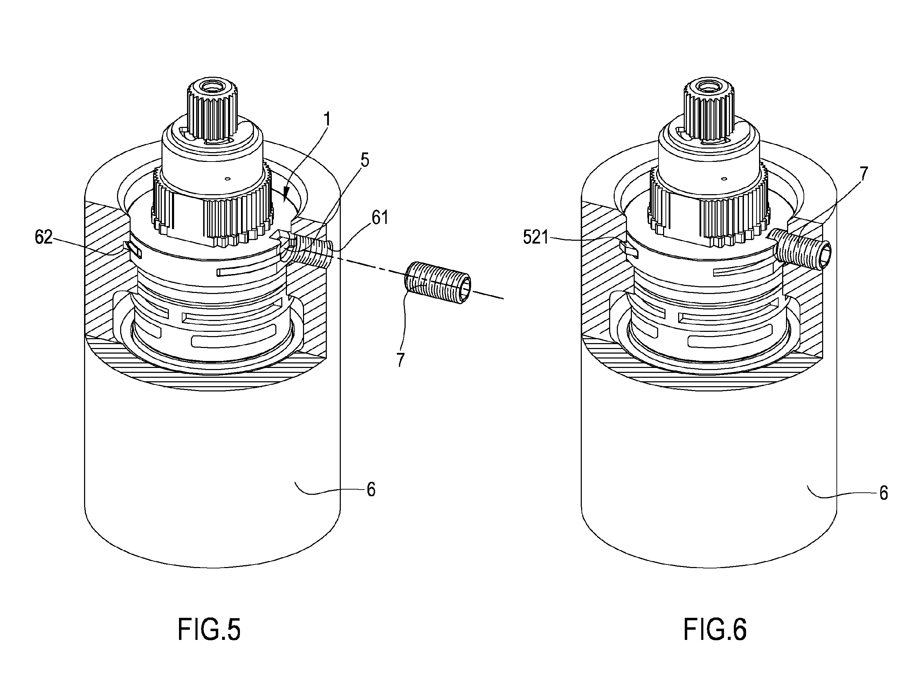

Once the cartridge **1** has been inserted into the body **6** of the tap, it takes the position shown in figure **5****.** In this arrangement the cartridge **1** can be drawn out from the body of the tap **6** easily. The cartridge is then locked as shown in figure **6****.**

Figure **6** shows a cartridge **1** correctly and permanently assembled in the body of the tap **6.** The grab screw **7** screwed in the through hole **61** firstly moves into abutment against the portion **51** of the washer **5** and then it pushes the washer **5** itself causing the displacement thereof inside the respective seat **31,** thereby the ends **521** and **531** comes out laterally for the engagement into the groove **62.** The limit of the grab screw **7** is defined by the seat **32** obtained in the upper portion **3** of the cartridge **1.** In this configuration the cartridge **1** is and remains stationary in the body of the tap **6,** also in presence of high water pressures in the respective water-supply line or in presence of water hammers or great thermal shocks.

It has to be noticed that the rounded shape of the ends **521** and **531** imitates the profile of the groove **62.**

The length of the legs **52** and **53** is calculated so that the cartridge **1** locked in the body **6** of the tap is coaxial thereto. In other words the distance between the stop surface **11** and the more peripheral surface of the ends **521** and **531** is calculated to allow the locking of the cartridge **1** in the body **6** of the tap coaxially.

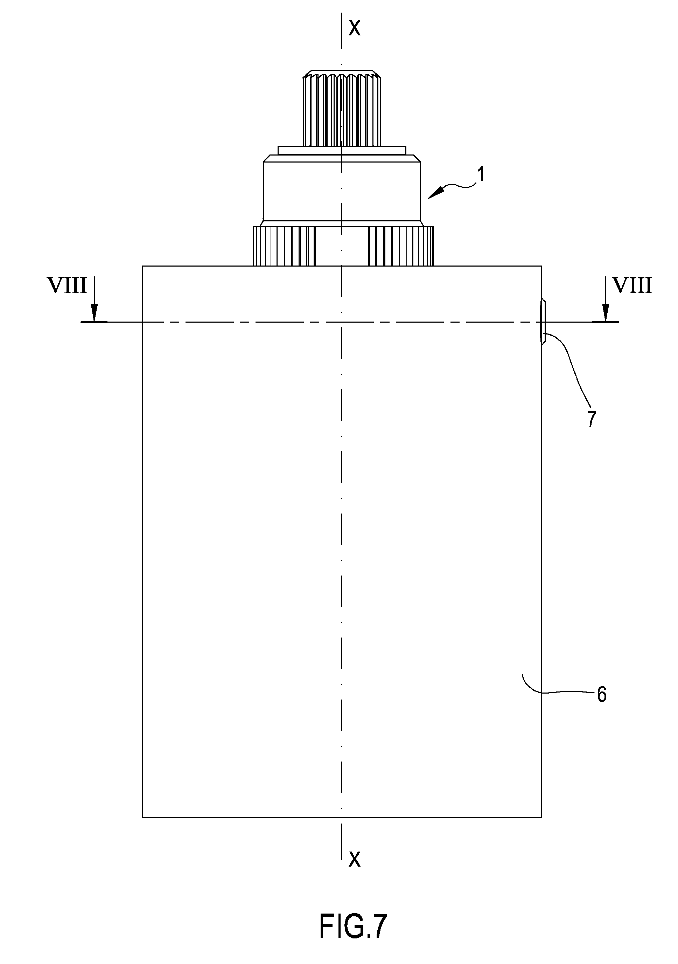

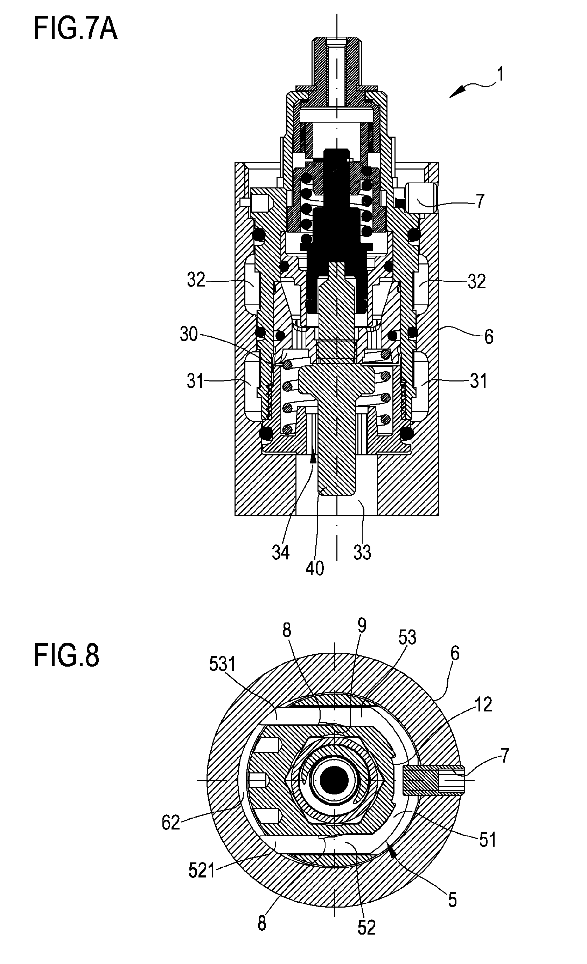

Figure **7** is a side and elevation view of the assembly formed by the cartridge **1** and the body of the tap **6.** The line VIII - VIII indicates the plane of the cross section shown in figure **8****.**

Figure **8** shows the washer **5** in the use position, that is with the ends **521** and **531** inserted in the groove **62** (the section cuts it in half along the axis X-X). The grub screw **7** pushes against the surface **10** of the washer **5** shown in figure **1****.** The surface **11** moves into abutment against a corresponding surface **12** of the cartridge **1.**

The teeth **8** of the washer **5** engage the corresponding seats **9** obtained in the seat **31** for accommodating the washer **5.** This coupling prevents the washer **5** from slipping off undesirably from the seat **31** before the cartridge **1** is inserted in the body **6** of the tap. Figure **7A** shown, in an axial section, the cartridge **1** properly assembled. Between the cartridge **1** and the body of the tap **6** two annular chambers **31** and **32** are defined, which supply hot water and cold water separately to the side holes **41** and **42** of the cartridge. The water is mixed in the chamber **30** and drained through the openings **34** and **33** provided on the bottom of the cartridge **1** and on the bottom of the body of the tap **6,** respectively. Automatic means for regulating the flow rates of hot water and cold water supplied to the mixing chamber **30** are visible too, generically indicated with the reference numeral **40.**

For example the regulating means **40** are of known type and they comprise a bulb sensitive to temperature changes and a return spring.

## Claims

1. Thermostatic cartridge (1) intended to be coupled with the body (6) of mixing tap according to claim 2, comprising:
- a longitudinal axis X-X;
- a lower portion (4), that could be longitudinally inserted within said tap body (6), provided with an inner chamber (30) for mixing water and provided with side holes (41, 42) for separately supplying hot water and cold water to said mixing chamber (30);
- an upper portion (3) comprising automatic means (40) for regulating the flow rates of hot water and cold water supplied to said mixing chamber (30);
- means (5, 31, 7) for attaching the upper portion (3) of the thermostatic cartridge (1) to said tap body (6), wherein said attaching means comprise:
- at least one U-shaped metal washer (5) and a corresponding accommodating seat (31) obtained in the upper portion (6) of the thermostatic cartridge (1), in a plane orthogonal to the longitudinal axis X-X;
- means (7) for pushing the washer (5) into the corresponding seat (31), and
wherein the washer (5) is slidingly inserted into the corresponding seat (31) under the effect of the pushing means (7) to engage a suitable groove (62) of the tap body (6) with its two ends (521, 531).

2. Body (6) of mixing tap intended to be coupled with the thermostatic cartridge (1) according to claim 1, comprising a substantially cylindrical inner compartment (63) for accommodating at least part of the thermostatic cartridge (1), wherein at the height of the accommodating seat (3) of the washer (5), in the surface bounding the compartment (63), at least one groove (62) is obtained in which the two ends (521, 531) of the U-shaped washer (5) can be inserted at least partially.

3. Thermostatic cartridge (1) according to claim 1, wherein the accommodating seat (31) of the washer substantially extends inside the upper portion (3) of the cartridge, being bounded on top and bottom by its surfaces, and has a first side opening adapted to accommodate the curved part (51) of the U-shaped washer (5) and two second side openings, from the opposite side with respect to the first side opening, to allow for the going out of the corresponding two ends (521, 531) of the U-shaped washer (5).

4. Thermostatic cartridge (1) according to claim 1 or claim 3, wherein said U-shaped washer (5) is provided with two or more teeth (8) facing to the longitudinal axis X-X and the thermostatic cartridge (1) is provided with corresponding seats (9) for the engagement with the teeth (8) of the washer, the shape coupling between the teeth (8) of the washer and the respective seats (9) being such to prevent the incidental pull out of the washer (5) from the corresponding seat (31) in the thermostatic cartridge.

5. Thermostatic cartridge (1) according to any one of the claims 1 and 3-4, wherein the curved portion (51) of the U-shaped washer (5) comprises an outer surface (10) intended to stop against said pushing means (7) and an inner surface (11) intended to abut against an inner portion (12) of the thermostatic cartridge (1).

6. Thermostatic cartridge (1) according to claim 5, wherein the distance between said inner surface (11) of the washer (5) and the two ends (521, 531) is predefined to obtain the correct positioning of the thermostatic cartridge (1) in the body (6) of tap with the longitudinal axis X-X matching with the axis of the tap body.

7. Thermostatic cartridge (1) according to any one of the claims 1 and 3-6, wherein the U-shaped washer (5) is made of a metal selected from brass, steel, aluminium or alloys thereof.

8. Thermostatic cartridge according to any one of the claims 1 and 3-7, wherein at least the upper portion (3) is made of a plastic material or metal.

9. Thermostatic cartridge according to any one of the claims 1 and 3-8, wherein said pushing means comprise a threaded grub screw (7) that could be screwed in a corresponding through hole (61) of the body (6) of tap radially extending at the height of the accommodating seat (31) of the U-shaped washer (5).

10. Thermostatic mixing tap, of the type comprising a thermostatic cartridge (1) in plastic material and a corresponding metallic tap body (6), provided with means for separately supplying hot water and cold water to the thermostatic cartridge (1), **characterized in that** the thermostatic cartridge (1) is a cartridge according to any one of claims 1 and 3-9 and the body (6) of tap is a body according to claim 2.
